Europäisches Patentamt

European Patent Office

Office européen des brevets

(11) Publication number: **0 137 577**
A1

(12) **EUROPEAN PATENT APPLICATION**

(21) Application number: 84302981.0

(22) Date of filing: 03.05.84

(51) Int. Cl.⁴: **B 66 B 9/08**

(30) Priority: 10.10.83 GB 8327034
16.02.84 GB 8404063

(43) Date of publication of application:
17.04.85 Bulletin 85/16

(84) Designated Contracting States:
AT BE CH DE FR IT LI LU NL SE

(71) Applicant: Stopher, Antony
Stairlifts Anglia The Street Woolpit
Bury St Edmunds Suffolk(GB)

(72) Inventor: Stopher, Antony
Stairlifts Anglia The Street Woolpit
Bury St Edmunds Suffolk(GB)

(74) Representative: Nash, Keith Wilfrid et al,
KEITH W. NASH & Co. Pearl Assurance House 90-92
Regent Street
Cambridge CB2 1DP(GB)

(54) A stair lift.

(57) A stairlift is battery powered, and the battery 32 is carried on the lift carriage 10. The battery powers a DC motor 34 which turns a pinion 88, and the pinion engages lateral pins 72 in a rail rack. The rail extend up the stairs and forms a track to guide and support the carriage which latter includes rollers 20 for engaging above and below the rail.

FIG. 1

Croydon Printing Company Ltd.

– 1 –

Title:     Stairlift

Description

**Field of Invention**

This invention concerns stair lifts and in particular an improved form of stair lift which can be fitted to stairs which incorporate bends.

**Background of the Invention**

Stair lifts for facilitating the elevation of the elderly and the infirm are generally known. Such devices conventionally comprise a track or rail adjoining a staircase to provide a rack up which a pinion drive can pull or push a carriage which includes a seat or the like for carrying one or more people.

Disadvantages of known designs are:

1. the near impossibility of mounting existing tracks to follow bends in a staircase;

2. the need to accommodate winding and unwinding of cables leading to the carriage;

3. danger arising from stoppage of the carriage between top or bottom extreme positions whilst carrying a passenger, thereby stranding the passenger "on the staircase" for the duration of the failure, particularly if the breakdown occurs during darkness.

It is an object of the present invention to provide an improved stairlift which does not suffer from the above disadvantages.

## Summary of the Invention:

According to one aspect of the present invention a stairlift comprises in combination:

1) a track formed from two parallel rails having rungs therebetween mountable to the side of a staircase;

2) a carriage mounted on the track;

3) a seat and footrest assembly pivotally mounted on the carriage to allow relative pivoting therebetween to accommodate changes in inclination of the running rail;

4) a direct current electric motor mounted on the carriage and driving a toothed pinion through a unidirectional transmission, engagement of the pinion with the rungs effecting the drive between the carriage and the track;

5) a rechargeable battery carried by the carriage or the seat assembly;

6) control circuit means including on-off and reversing switch means operable by a person seated on the carriage, for conveying electric current from the battery to drive the motor either in an upward direction or a downward direction, and

7) pairs of rollers mounted within the carriage for engaging the rails, one roller of each pair being located above and the other below one of the rails.

According to another aspect of the present invention a stairlift comprises:

1. a track made up of parallel rails mountable to or adjacent a staircase and incorporating transversely extending rungs for engagement by a driving pinion;

2. a carriage having rollers which allow it to run up and down the track, and which includes a direct current electric motor and battery power supply therefor;

3. control means on the carriage for controlling the flow of current from the battery to the motor and controlling the direction of flow and therefore the direction of movement of the carriage along the track;

4. current supply means at each of the two or more parking places along the track (typically at the extreme ends thereof), and

5. connecting means for electrically connecting the battery to the current supply means at each said parking place, thereby to maintain the battery in a charged condition between uses.

According to another aspect of the invention in a stairlift comprising and a track, a carriage movable along the track by an electric motor there is provided:

1. a battery on board the carriage, and

2. lamp means mounted on the carriage and connectable to the battery to provide emergency lighting in the event of a power failure.

In addition to the emergency lighting, audible alarm means may be provided to allow a stranded passenger to attract attention to their plight. Typically the alarm means may also be operable from the battery on board the carriage.

Where a battery is carried on board for emergency lighting and/or alarm operation and/or for driving a motor on board, a battery condition indicator is preferably carried on board to reduce the likelihood of the lift being operated whilst the battery is not in a sufficient state of charge to permit completion of at least one journey or operation of the emergency lighting and/or alarm.

Preferably a device may be included for inhibiting operation of the carriage if the charged condition of the battery is below a preselected "safe" threshold.

Where recharging of a battery carried by the carriage is provided for at stop positions along the track, the electrical connections between the charging current supplies and the battery are preferably effected automatically.

Preferably remote control means is provided for remotely providing current to a driving motor, when fitted, to allow the carriage to be despatched from one stop position towards another without the need for on-board passenger control.

- 5 -

Preferably a mechanically locking braking device is provided on the carriage to inhibit movement of the carriage at least in a downward direction whenever current to the motor is switched off or a failure of a positive driving torque is detected.

Drive transmitting pins may extend from one side only of the track, for engagement by the driven pinion.

Preferably the track is always curved so that the driving pins protrude from the convex edge of the curvature. Where the track is curved, it is important that the curvature does not produce an effective increase in the linear spacing between driving pins which will cause the pinion teeth to become disengaged from the track.

In order to accommodate small discrepancies in staircases, the running rail is preferably fixed to the staircase through adjustable mountings giving an installer the facility to make fine adjustments to the inclination of the rail during installation.

According to a further aspect of the present invention in a stair lift switch means is provided on the carriage and operated by actuators located at the stop positions of the carriage of the stair lift when it occupies those positions, to normally inhibit the flow of operating current to the motor.

Preferably an electrical or mechanical (or both) interlock is provided which prevents the supply of operating current to the motor whilst the carriage is at a stop position except at the correct polarity to cause the motor to operate to move the carriage in a direction away from the stop position.

Preferably override switch means is provided operable from at least on the carriage, which will allow operating current to flow to the motor to cause the same to operate to drive the carriage away from a stop position.

In the foregoing the term unidirectional is intended to mean a transmission device such as a worm gear drive which will only transmit torque from an input shaft to an output shaft and not vice versa.

A second rail may be provided running parallel to the front rail and at different relative levels thereto the second rail forming an elongate cam, and the carriage includes a follower which engages the second rail to alter the inclination of the seat bearing housing so as to maintain the orientation of the seat correct at all times as the carriage traverses the rail.

The follower is conveniently one or more rollers mounted on or carried by an arm mounted on and extending from the second carriage.

Adjustable mountings may be provided for the second rail to allow for fine adjustments to be made to the inclination of the second rail relative to the staircase and or the running rail during installation.

It is to be understood that any or all of the aforementioned aspects may be combined into a single stair lift or may be employed separately in otherwise conventional lifts as appropriate.

The invention will now be described by way of example with reference to the accompanying drawings.

## List of the drawings

Figure 1 is a side view of a stair lift embodying one aspect of the invention with part of the assembly removed;

Figure 2 is an opposite side view of the lift shown in Figure 1;

Fig 3 is an end view in the direction of arrow X in Figure 2, with the backing removed;

Figure 4 is a plan view of a right angle bend in a staircase with track according to a first embodiment of the invention fitted therearound;

Figure 5 is a side view of part of the track of Figure 4;

Figure 6 is a front view similar to that of Figure 1, of another embodiment of the invention, with the front covers removed;

Figure 7 is a rear view of the unit shown in Figure 6;

Figure 8 is an end view of the unit shown in Figure 6; when viewed in a direction up the running rail;

Figure 9 is an end view of the unit shown in Figure 6 when viewed in the opposite direction, down the running rail;

Figure 10 is a block circuit diagram of a motor speed control circuit;

Figure 11 is a block circuit diagram of a power supply, control, charging circuit and calling transmitter for remote control of the stairlift;

Figure 12 is a block circuit diagram of a receiver for use with the transmitter of Figure 11;

Figure 13 is a plan view of a right-angle bend in a staircase with track according to the second embodiment of the invention fitted therearound;

Figure 14 is a perspective view of a curved track section;

Figure 15 shows a track support;

Figure 16 is a side view of a track fitted to a staircase;

Figure 17 is a side view of a stair lift carriage constructed as another embodiment of the invention;

Figure 18 is a view of the drive assembly of the carriage with one side plate removed;

Figure 19 is an end view of the running gear of the carriage;

Figure 20 is a plan view of the running gear;

Figure 21 is a partially broken away view of the running gear;

Figure 22 is a detailed view of one roller, and

Figure 23 schematically illustrates a modification to the drive train of the carriage.

## Description of illustrated embodiments

In the drawings a carriage assembly has a seat 10 is carried on a pivoting frame 12 having two cheeks 14 and 16 and a seat supporting bridge 18. The side cheek 14 is generally triangular and the cheek 16 is larger and generally rectangular and includes a foot rest 20 at the lower end. The frame 12 is pivotally attached at 22 and 24 to stub axles which are attached to an inner parallel sided frame having a bridge 26 and side walls 28, 30. A battery 32 is carried below the bridge 18 with the outer frame whilst a DC motor 34 is carried below the bridge 26 within the inner frame. Connections between the battery and the motor are not shown.

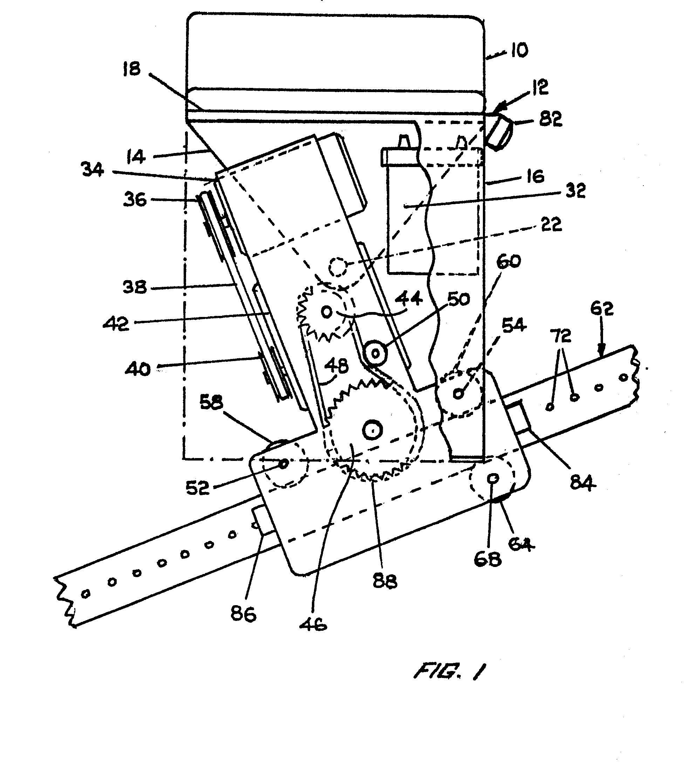

The motor drives a toothed pulley 36 mounted on an output shaft and, via a toothed belt 38, a second toothed pulley 40 mounted on the input shaft of a worm drive gearbox 42 having a laterally extending output shaft on which is mounted a toothed chain drive gear 44. The latter drives second gear wheel 46 via a chain 48 having a tensioner 50 (see Figure 1).

The frame sides 28, 30 are of increased size at their lower ends and provide mountings for roller axles 52 and 54. Upper rollers 58 and 60 are mounted on the axles 52, 54 and run on the upper surface of a rail 62.

As best seen in Figure 3, the lower roller assembly is formed by two rollers 64, 66 carried by individual stub axles 68, 70 and engage the underside of the rail 62.

The worm drive gearbox 42 will only allow torque to be transmitted to the gear wheel 46, and will not allow torque to be transmitted from the gear wheel 46 back through the gearbox.

Controls (not shown) allow the motor to be started and stopped and run in one direction or the other to provide for up or down movement of the carriage assembly.

The track is in the form of a hollow box section rail 62 having driving pins 72 protruding laterally from one side. In order to accommodate bends the rail is mounted so that the pins protrude into any corner, i.e. are on the outside of any curve in the rail.

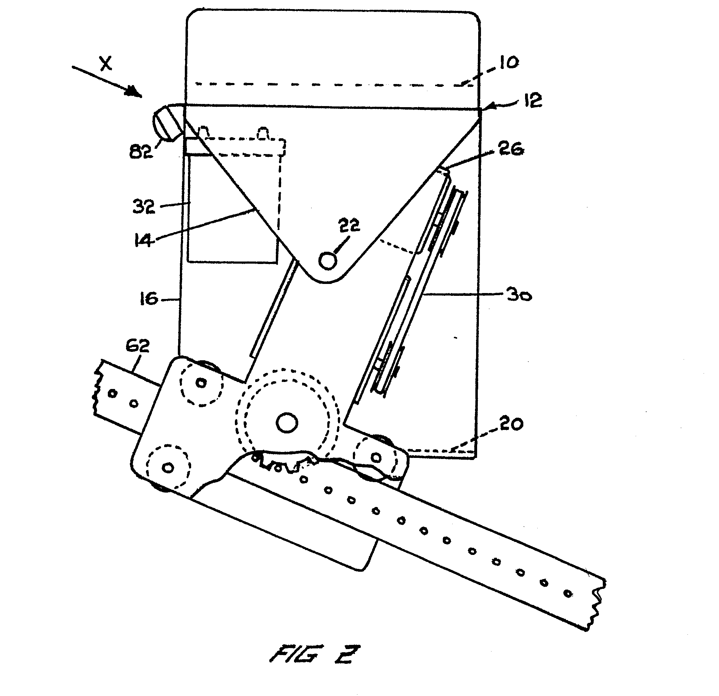

This is shown in Figure 4 in which a rail 62 is shown mounted 6" away from the side of a staircase and curving smoothly through a right angle to accommodate a right angled bend in the stairs.

Where the rail must change ramp angle (as opposed to direction) a joint such as shown in Figure 5 is employed. Here the rising rail 62 is cut at an angle at 74 and butt joined to another length of rail 76 which then extends from the first length of rail 62 at an angle determined by the angle of the cut 74.

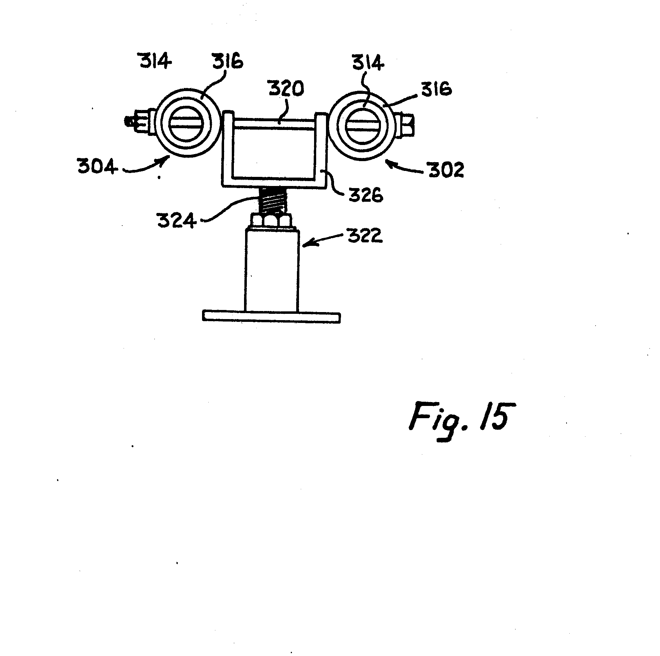

Mounting struts or track supports 78 extend from the centre of the underside of the rail sections 62 and 76 and are secured as by bolting or screwing to the side of a staircase. More details of these struts are shown in Figure 15.

A stop 80 is fitted at the top and at the bottom of the track and a push button switch (not shown) is incorporated into all such stops to control the supply of energising current inter alia to an alarm to indicate the lift assembly has arrived at the top or bottom of the track.

Carried below the seat 10 is a lamp 82 (see Figure 1) which provides emergency lighting in the event of a mains supply failure to the building in which the stair lift is installed. The lamp 82 may be illuminated all the time or may be under the control of a switch (not shown) on the assembly.

At the top and bottom of the track are located electrical charging devices for providing direct current at a voltage slightly in excess of the normal battery e.m.f., and automatic connections 84 and 86 on the carriage engage in sockets in the charging devices to establish continuity between the charging devices and the battery when the unit is stationary at the top or the bottom of its travel.

Drive is obtained by the engagement of a toothed wheel 88 (see Figures 1 and 3) with the pins 72. The wheel 88 is mounted on and driven by a main axle 90 on the other end of which is mounted the driven toothed wheel 46.

A mechanical brake is provided (not shown) which engages between the pins 72 and prevents movement of the carriage assembly down the rail at any time, except when under power.

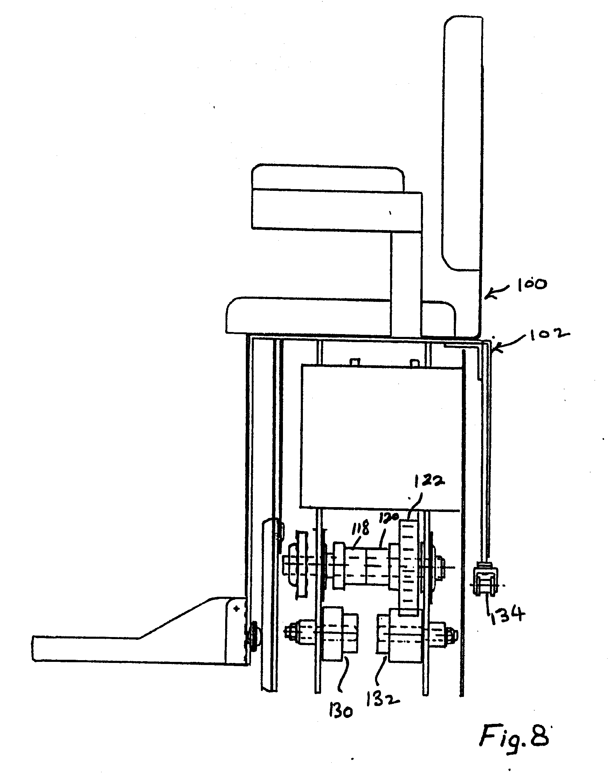

In the embodiment shown in Figures 6 - 9 a seat 100 is carried on an upper housing 102 which is pivotally joined at 104 to an inner lower-housing 106. The latter includes a DC motor 108 and gearbox 110 having an output pinion which drives a final pinion 112. The latter drives a final shaft 116 via a chain drive 114 and on the shaft 116 is mounted a split roller assembly 118, 120 and a toothed driving wheel 122 which engages pins 124 which extend laterally from a rail 126 on which the roller assembly 118, 120 runs.

A second roller assembly 128, spaced from the roller assembly 118, 120 also runs on the rail 126 and a third, split roller assembly 130, 132 engages the underside of the rail 126.

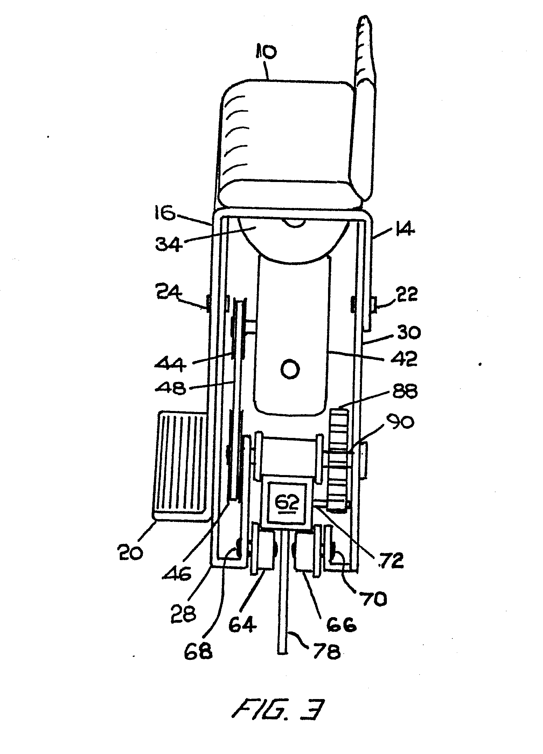

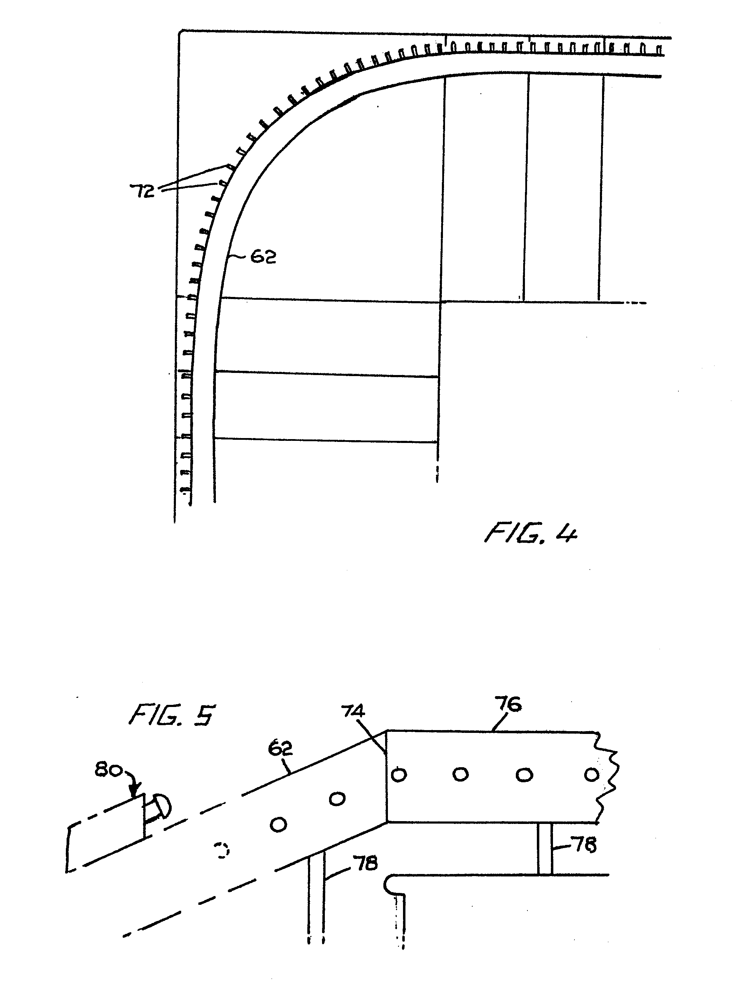

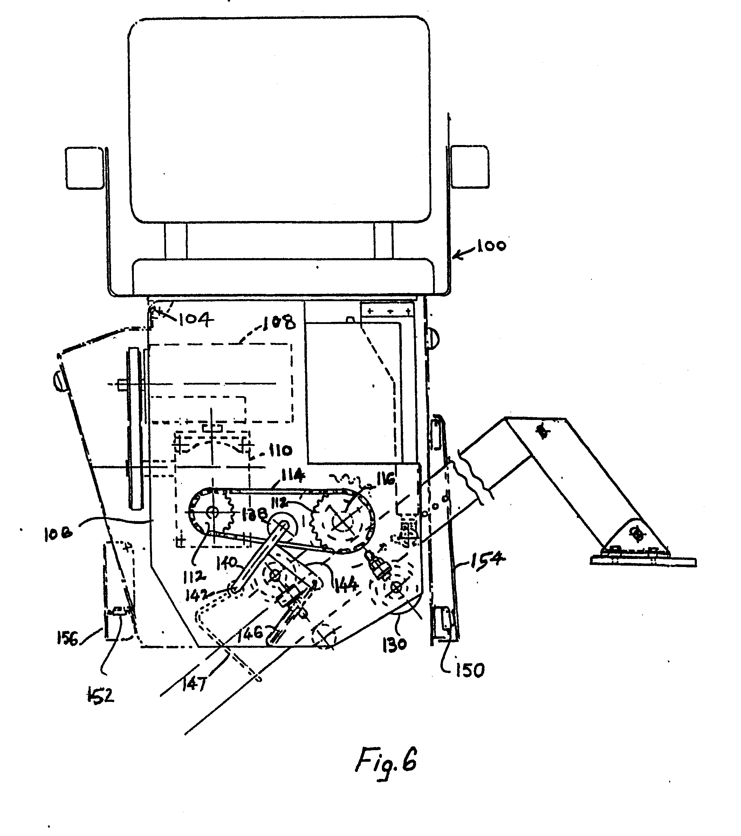

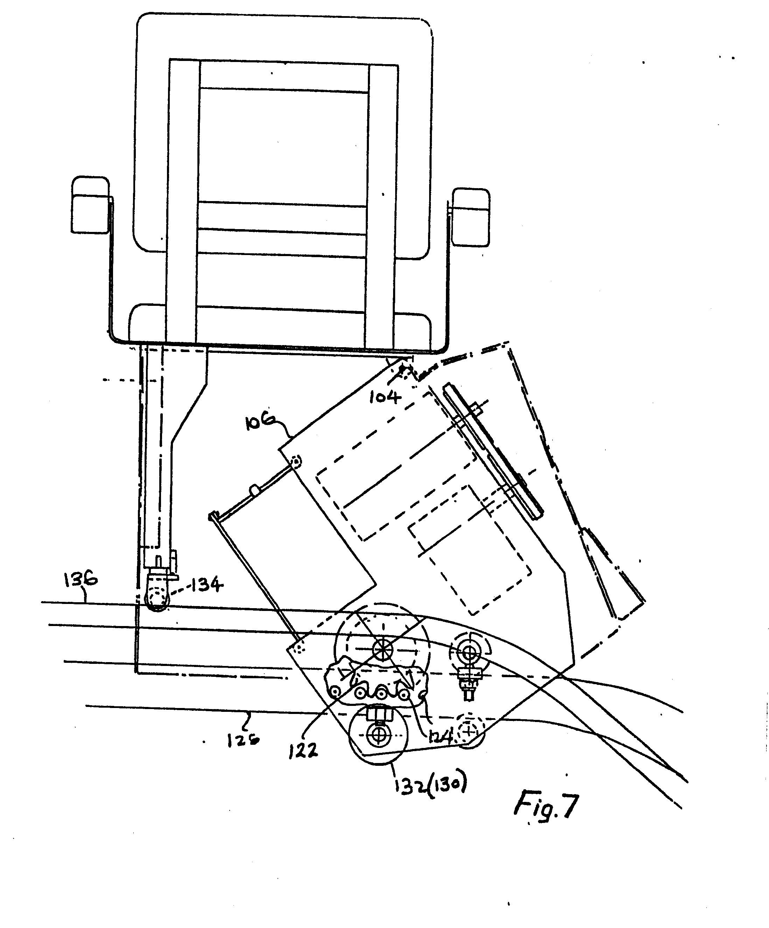

To the rear of the outer housing 102 and at a lower corner thereof is located a roller 134 which runs on a second track 136 which extends at a higher level than the rail 126 when the latter is horizontal but crosses over and runs below the level of the rail 126 where the latter is inclined. As best seen by comparing Figures 6 and 7 the pivoting connection between the two housings and the engagement of the roller 134 on the track 136, causes the upper, outer housing and the seat 100 to remain horizontal at all times, even when the carriage 106 is tilted as in Figure 6.

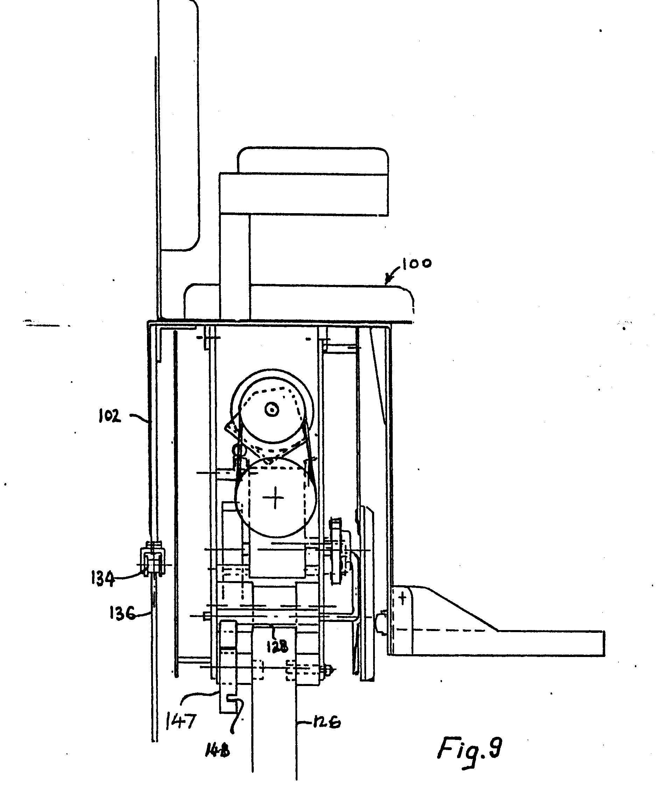

In order to prevent a runaway occuring in the event of a loss of braking force normally exerted by the gearbox through, for example, a breakage of the chain 114, a tensioner 138 engages the chain and is carried by an arm 140 pivoted at 142. A radius arm 144 is attached to a spring 146. Rotatably joined to the arm 140 (so that it

- 13 -

also pivots with the arm 140 about the axis 142) is a braking arm 147. The latter includes a cut-out at 148 as shown in Figure 9 which aligns with the line of pins 124 and allows the carriage assembly to move up or down the rail 126. However, the action of the spring 146 is such that in the event of a serious reduction in the tension of the chain (such as when a break in the chain occurs) the arm 140 will pivot clockwise (in Figure 6) and raise the braking arm 147 so that an unslotted region of the latter becomes aligned with the line of pins so as to immediately arrest movement of the carriage assembly which would otherwise occur.

Automatic switches for cutting off the supply of energising current to the motor are provided at 150 and 152, operable by engagement of a sensitive edge (so-called) such as 154, 156 against an end stop (not shown) at the upper end or lower end respectively of the rail 126.

Contrary to the embodiment of Figures 1 - 5 the motor bearing section of the unit shown in Figures 6 - 9 travels square to the rail 126 when the latter is horizontal and is inclined to the rail 126 when the latter is itself inclined to the horizontal.

Although not shown in detail the pins or pegs 72 in Figures 1 - 5 and 124 in Figures 6 - 9 may be secured in place by screwing or welding or brazing or gluing by an appropriate adhesive.

In order to accommodate sharp bends and corners the rear of the carriage assembly may be curved so as to more closely follow the curvature of the track.

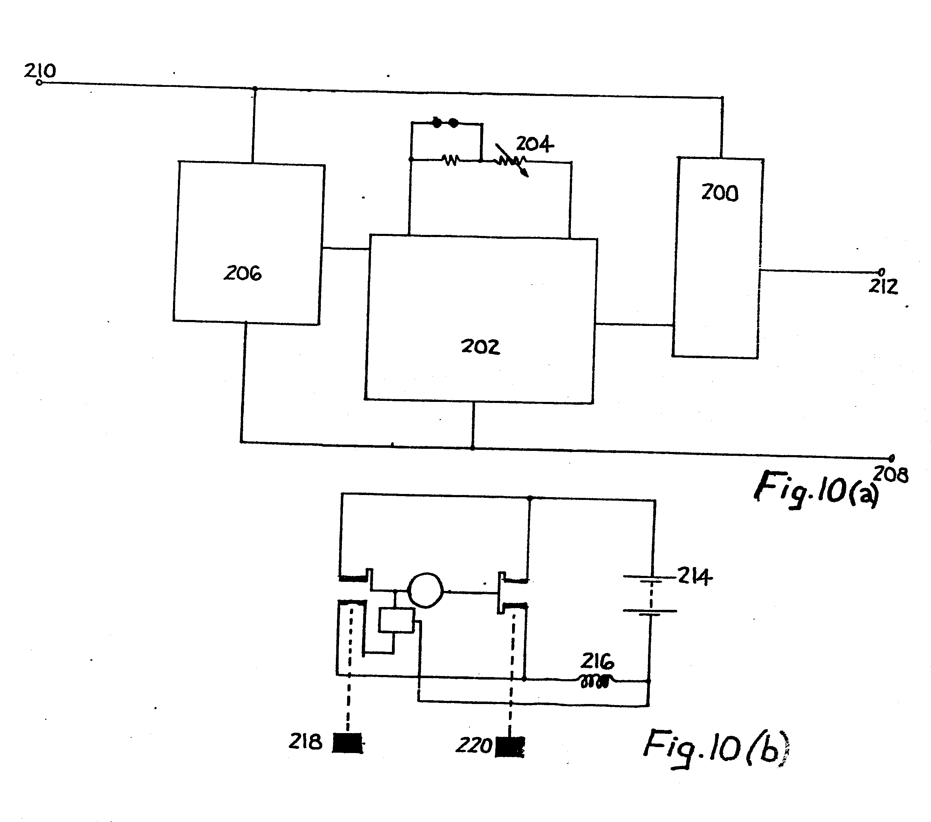

In Figure 10a direct current for a motor (not shown) is electronically chopped by a solid state switch 200. The pulse width of the resulting pulsed current is controlled by in turn controlling the duration of switching pulses supplied to the switch 200 by means of a control circuit 202. The pulse duration is set by a potentiometer 204. Pulses are derived from an oscillator 206.

A DC series motor is shown connected, in the overall circuit of Figure 10b, to a battery 214 and the speed control circuit of Figure 10a is shown connected to one of the supply paths to the commutator of the motor, so as only to be effective during one mode of rotation of the motor. Since the speed control is only of importance when the unit is attempting to overrun in the downward direction (i.e. when the motor is in reverse if forward is equivalent to driving the unit up the stair rail), the speed control circuit is only connected in the path effective when the motor is running in reverse. In the opposite mode the motor rotor windings are connected directly in series with the field winding 16.

The reversing is achieved by means of power relays having windings 218 and 220.

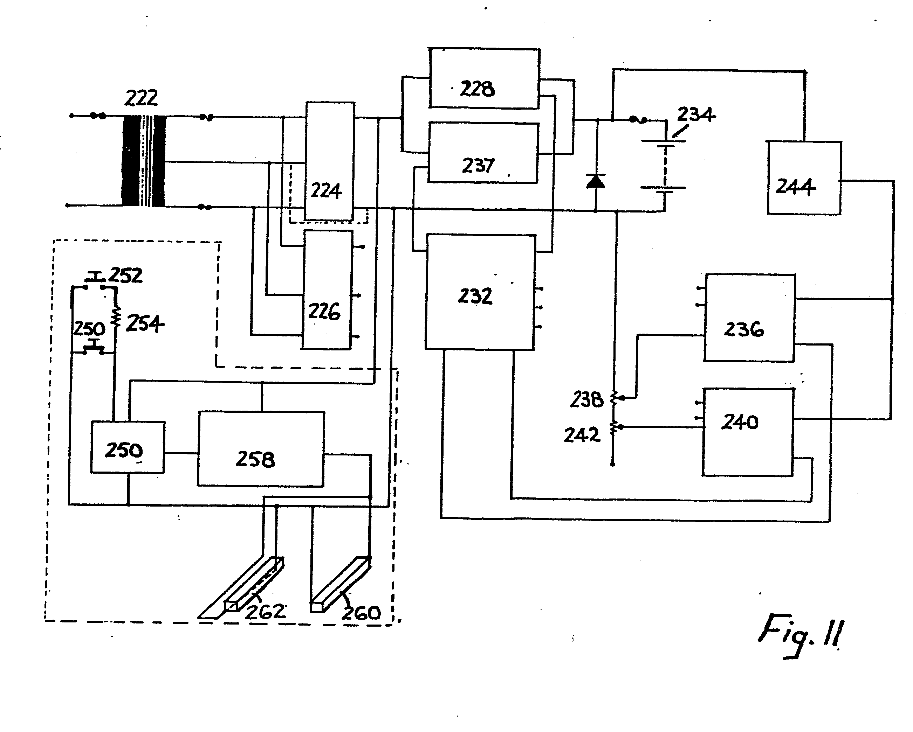

Figure 11 shows a mains transformer 222 supplying AC power at appropriate voltage to a DC charging power pack circuit 224 and a power supply for the electronic circuits 226. The former supplies power via a pair of solid state relays 228 and 230, which are controlled by the outputs from a Schmidt amplifier circuit 232 to the battery 234. When the battery voltage rises above a first threshold set by circuit 236 and potentiometer 238 the high relay 238 operates to limit further charging.  When the battery voltage drops below a threshold set by circuit 240 and potentiometer 242, the low circuit 230 operates to increase the charging current.

A time delay circuit 244 prevents sudden changes in charging current levels to occur.

Remote control of the unit is achieved by a transmitter unit at each end of the rail.  This contains forward and reverse switches 250, 252 the latter providing a higher resistance path when closed than the former (due to resistor 254), to an oscillator circuit 256, so as to vary the frequency between a high value and a low value.

The signals from the oscillator are amplified by an amplifier 258 and supplied to opposite ends of the rail such as 126 in Figure 6 - 9 as shown at 260 in Figure 11. An induction loop may be used as shown at 262.

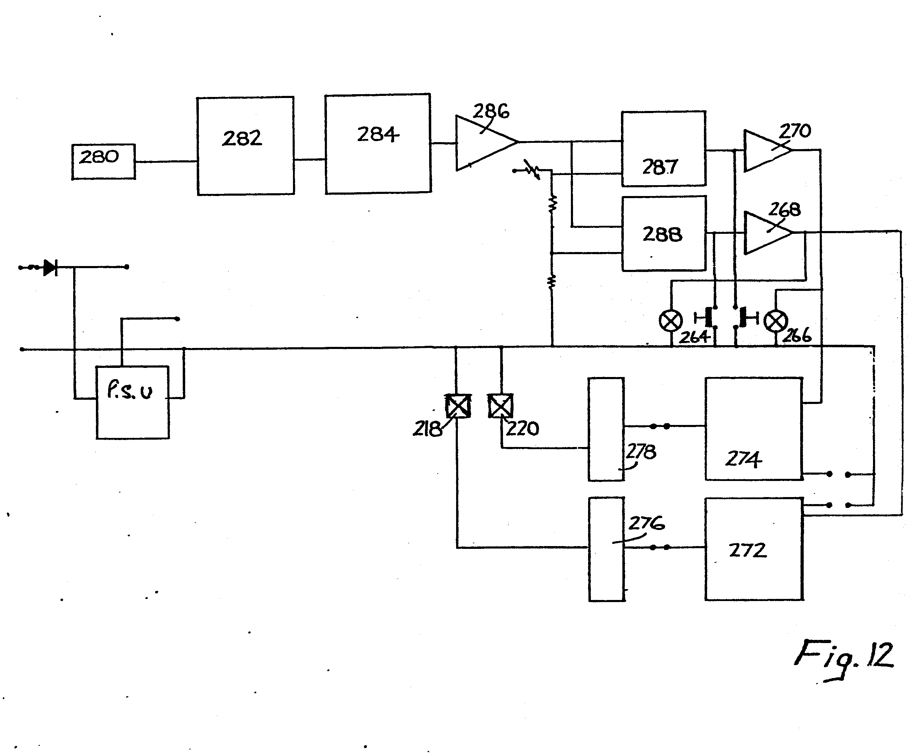

Figure 12 shows the receiver and control circuit for mounting on the stairlift unit.  For operation in situ in the stairlift, up and down push button operating switches 264 and 266 are provided.  Closure of either one will produce "high" output in the input of its associated inverting buffer amplifier 268, 270 and corresponding operation of the timer delay 272 or 274 and consequent operation of one of the two relay units 218, 220 via a solid state relay 276 or 278.

Remote operation is achieved by signals induced in a magnetic pick up coil 280 linked to the magnetic field produced by the signals in the rail (such as 126).  These signals are amplified by amplifier 282 and an analogue signal is obtained using D to A converter 284. A buffer amplifier 286 provides a high or low signal which either triggers the HIGH Schmidt trigger circuit 287 or the LOW Schmidt trigger circuit 288 to ground, the output of one or other of the inverting buffer amplifiers 268, 270 resulting in the energisation of one or the other of the relay coils 218, 220.

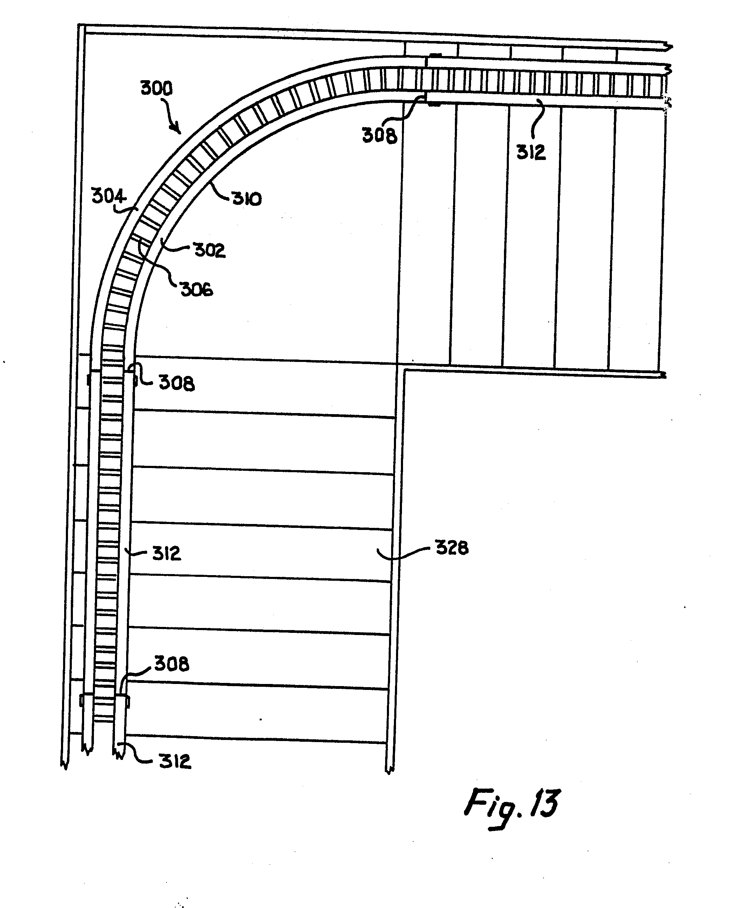

The track 300 shown in Figures 13 to 16 differs from that shown in the previous Figures in that two rails 302 and 304 are provided, and are joined by driving pins 306 which extend between the rails. The carriage assembly will be modified so that it is supported by rollers running on both rails, and a toothed wheel will engage with the pins 306, between the rollers. The two-roller support for the carriage will assist in providing adequate stability.

The track will be made in sections, and joints between adjacent sections are indicated by reference numerals 308. One curved section 310 is shown between straight sections 312. As a result of the sectional nature of the track, it will be possible to fit most installations just with standard length sections.

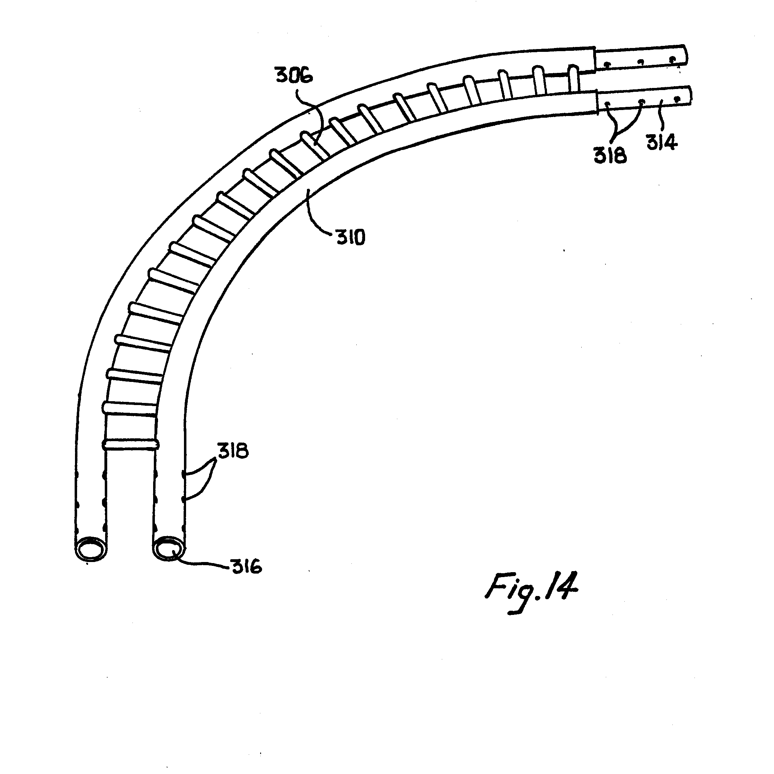

Joints between the sections will be effected as shown at the ends of the track section 310 in Figure 14. One end of the section has protruding spigots 314, and the other end has hollow ends 316. The spigots 314 on one track section will plug into the hollow ends 316. The two sections will be secured together by passing bolts through the holes 318 in both nails of both sections, so that the middle part of the bolt forms one of the pins 306.

This can be seen more clearly in Figure 15, where a bolt 320 is shown in position. This bolt also locates a track support 322 which is adjustable for height on a threaded stem 324. The top of the support 322 is in the form of a yoke 326 so that it does not obstruct either the bolt 320 where it functions as a pin 306, or the rails 302 and 304.

A support 322 will be positioned at least at each joint in the track. The holes 318 at a track section joint which are not used for a support will be fitted with a bolt 320 to act as a driving pin.

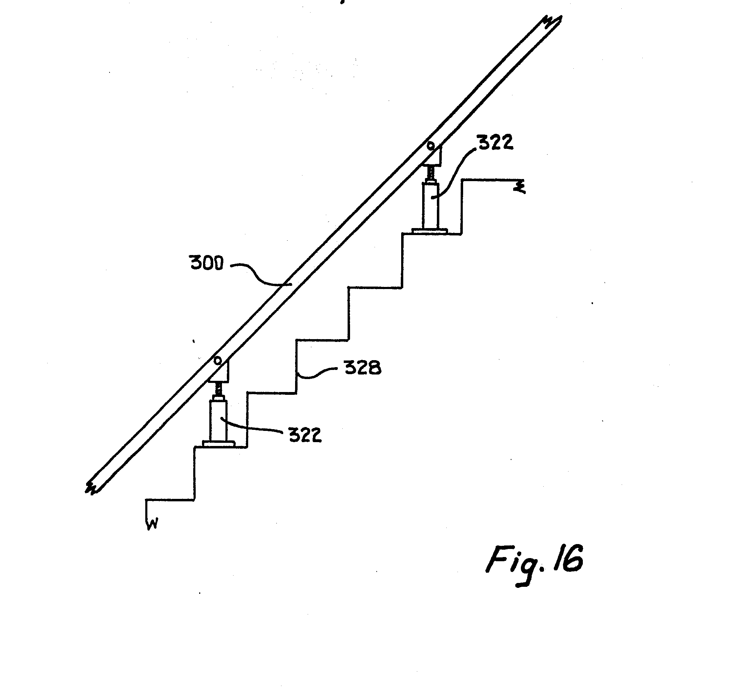

Figure 16 shows how the track 300 will be mounted on a staircase 328, with track supports 322.

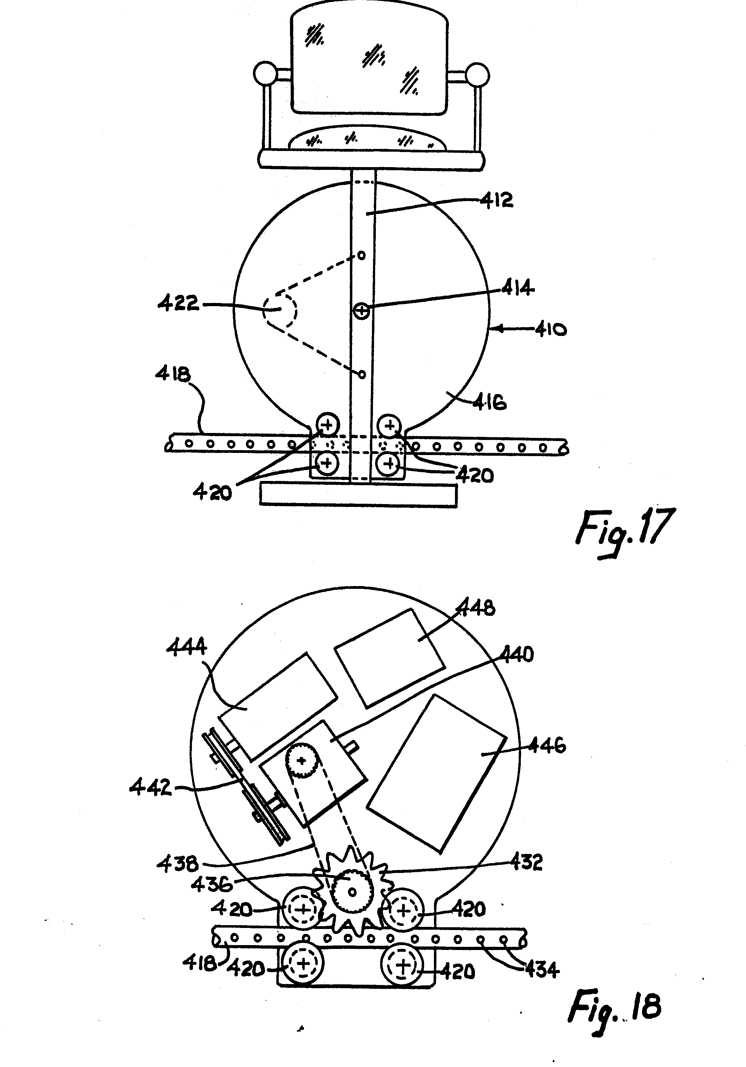

Figure 17 shows a carriage having a frame 410 which includes rollers 420 adapted to run on a track 418. A seat/footrest unit 412 is mounted on the frame about a pivot axis 414. The angular position of the unit 412 relative to the frame 410 is controlled by means of a length of cable passing around a controlled pulley 422.

The frame 410 comprises two generally circular plates 416, and drive train components and running gear are housed between these two plates. In Figure 18, the front plate is shown removed to reveal a battery 446 which forms a power source; a control system 448 connected to the battery and operable by the user; and an electric motor 444 driven by the battery 446 and a gearbox 440. The motor 444 has an input to the gearbox 440 through a drive belt 442, and produces an output which is passed through a belt 438 to a gear 436. The gear 436 is rotationally fast with a pinion 432, and the pinion 432 is arranged so that its teeth engage between rungs 434 of the ladder-like track 418, although in the other direction to control the carriage as it moves down the track.

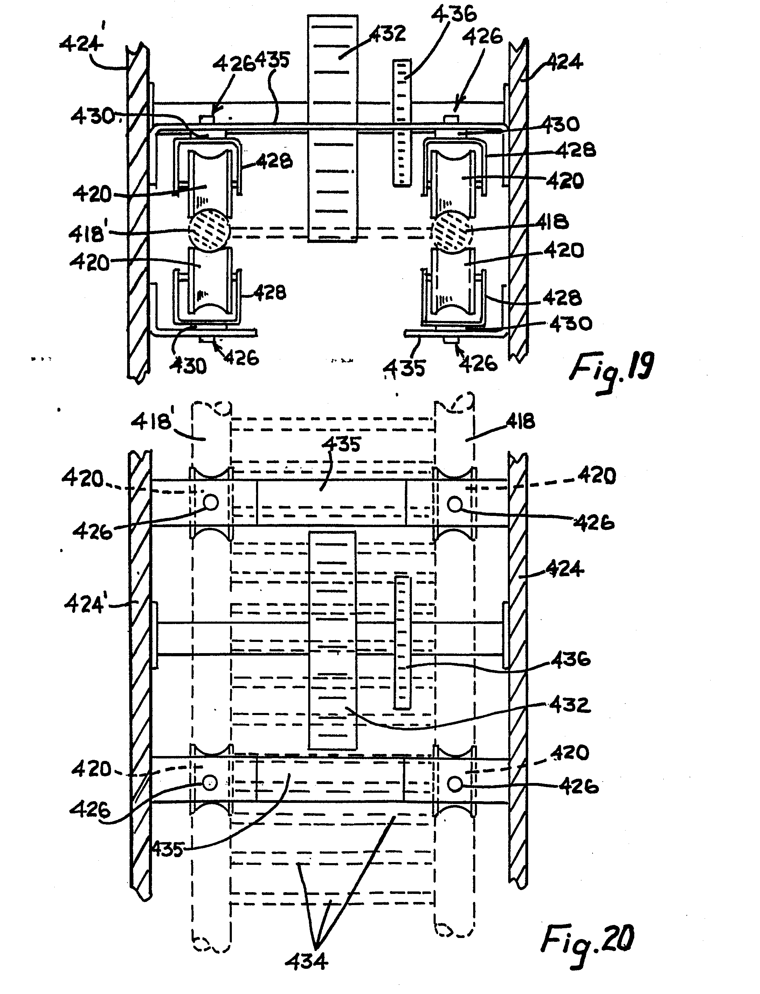

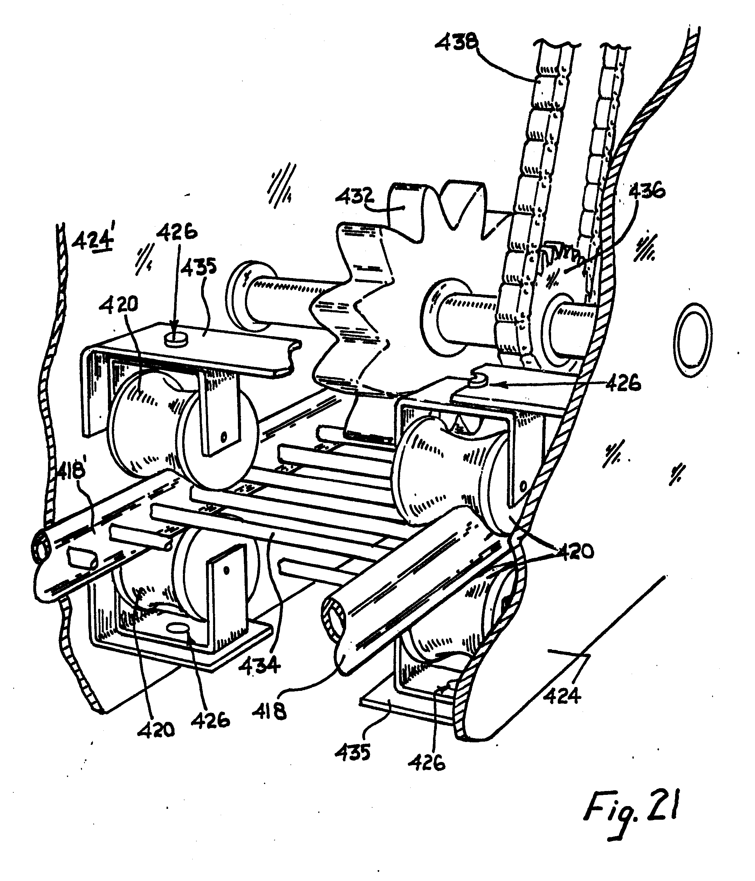

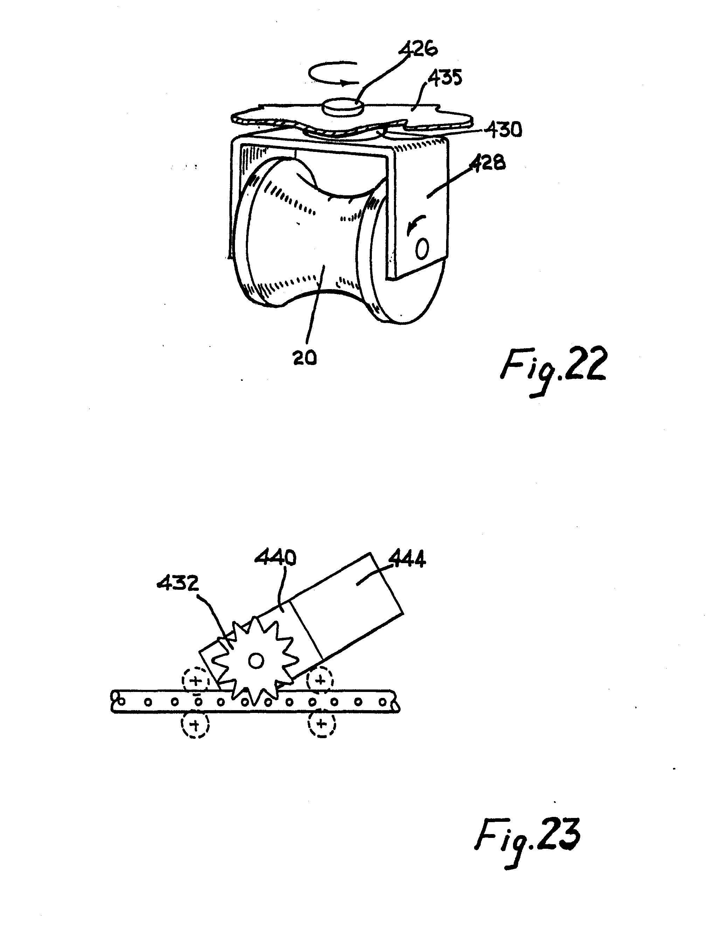

Figures 19, 20, and 21 show details of the running gear which comprises eight rollers 420, arranged in pairs. In each pair there is one roller above and another roller directly below the track. The rollers are connected to cross-beams 435 spanning between two face plates 424 of the frame. Each roller is mounted in a yoke 428, and the yoke is pivoted to the appropriate cross member 435 by means of a pivot joint 426. A thrust bearing 430 is inserted between the yoke 428 and the cross member 435 to allow the yoke to rotate about the axis of pivot 426 when under load. Details of this structure are shown in Figure 22. It will be seen that the rollers are waisted so that they sit centrally on the longitudinal members 418 and 418' of the track.

The longitudinal spacing of the roller pairs on the rails 418 is of importance, and they are mounted sufficiently close to prevent "binding" when the carriage is traversing a curved rail section, bearing in mind that a curved rail section can extend in two orthogonal planes.

In the modification shown in Figure 23, the motor 444 is connected directly to the gearbox 440, and the pinion 432 is mounted on a shaft which is an output shaft of the gearbox. This construction makes it possible to dispense with a chain or belt drive between the motor and the pinion.

In a modification (not shown) the motor and gearbox are pivotally mounted on the frame 410, eg using two rollers similar to rollers 420, to maintain pinion 432 a constant

- 19 -

distance from the track in order to prevent the teeth of pinion 432 from "binding" on the track when passing along sharply curved track regions, eg on so-called nose bends of staircases.

Claims

1. A stairlift comprising:
(1) a track mountable to or adjacent a staircase and comprising a pair of rails spaced apart and having pins extending therebetween;
(2) a carriage movable up and down the track;
(3) a direct current electric motor and battery power supply therefor mounted on the carriage;
(4) control means on the carriage for controlling the flow of current from the battery to the motor and controlling the direction of flow and therefore the direction of movement of the carriage along the track;
(5) current supply means at each of two or more parking places along the track;
(6) connecting means for electrically connecting the battery to the current supply means at each said parking place, thereby to maintain the battery in a charged condition between uses. ·

2. A stairlift as claimed in claim 1, wherein a device is included for inhibiting operation of the carriage if the charged condition of the battery is below a preselected "safe" threshold.

3. A stairlift as claimed in claim 1, wherein recharging of the battery carried by the carriage is provided for at stop positions along the track.

4. A stairlift as claimed in claim 1 including remote control means for remotely providing current to a driving motor to allow the carriage to be despatched from one end position towards another without the need for on-board passenger control.

5. A stairlift as claimed in claim 1, wherein the track comprises two running rails, with rungs extending from one rail to the other.

6. A stairlift in combination with a track formed from two parallel rails having rungs extending therebetween, comprising:

(1) a carriage mounted on the track;

(2) a seat and footrest assembly pivotally mounted on the carriage to allow relative pivoting therebetween to accommodate changes in inclination of the running rail;

(3) a direct current electric motor mounted on the carriage and driving a toothed pinion through a unidirectional transmission, engagement of the pinion with the rungs effecting the drive between the carriage and the track;

(4) a rechargeable battery mounted on the carriage or the seat assembly;

(5) control circuit means including on-off and reversing switch means operable by a person seated on the carriage, for conveying electric current from the battery to drive the motor either in an upward direction or a downward direction, and

(6) pairs of rollers mounted within the carriage for engaging the rails, one roller of each pair being located above and the other below one of the rails.

7. A stairlift as claimed in claim 6 wherein each roller has a peripheral shape which conforms to the shape of the rail and prevents lateral movement of the roller relative to the rail.

0137577

- 22 -

8. A stairlift comprising a track, a carriage movable along the track by an electric motor, a battery on board the carriage, and lamp means mounted on the carriage and connectable to the battery to provide emergency lighting in the event of a power failure.

FIG. 1

FIG 2

FIG. 3

FIG. 4

FIG. 5

Fig.6

Fig.7

Fig.8

0137577

100

102

134

136

147

148

128

126

*Fig.9*

Fig. 10 (a)

Fig. 10 (b)

0137577

Fig. 11

Fig. 12

11/19

0137577

Fig. 13

306

310

318

314

318

316

Fig.14

Fig. 15

322

300

328

322

W

*Fig. 16*

0137577

*Fig.17*

*Fig.18*

Fig. 19

Fig. 20

Fig. 21

426

435

430

428

20

*Fig.22*

432

440

444

*Fig.23*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 556 534 (W. HABEGGER) <br> * page 9, lines 1-7; figure 1 * | 1,5,6 | B 66 B 9/08 |
| A | US-A-2 888 099 (SHEPARD WARNER) <br> * column 1, line 43 - column 2, line 13; figures 2-4 * | 6 | |
| A | GB-A-1 445 570 (T. DOOLEY) <br> * page 3, lines 29-46; figure 1 * | 4 | |

TECHNICAL FIELDS SEARCHED (Int. Cl. ³)

B 66 B 9/00

The present search report has been drawn up for all claims

| Place of search | Date of completion of the search | Examiner |
|---|---|---|
| THE HAGUE | 18-10-1984 | ZAEGEL B.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82